# EUROPÄISCHE PATENTANMELDUNG

(11) **EP 3 842 600 A1**
(43) Veröffentlichungstag der Anmeldung: **30.06.2021**
(21) Anmeldenummer: 19219472.8
(22) Anmeldetag: 23.12.2019
(51) Int. Cl.: E04F 11/18, F16B 21/04, F16B 21/12

(54) **BEFESTIGUNGSSYSTEM FÜR HANDLAUF**

(71) Anmelder: Frank, Karlheinz, 63073 Offenbach am Main (DE)
(72) Erfinder: Frank, Karlheinz, 63073 Offenbach am Main (DE)
(74) Vertreter: Stellbrink & Partner Patentanwälte mbB

(57) **Zusammenfassung**

Ein System zum Befestigen einer Führungseinrichtung an einem Aufnahmegegenstand, aufweisend ein Abstandsstück, auf der distalen Seite geeignet zur Aufnahme der Führungseinrichtung und auf der proximalen Seite versehen mit mindestens einem ersten Verbindungselement, ein erstes Befestigungselement, mittels welchem das Abstandstück mit der Führungseinrichtung verbunden ist, ein zweites Befestigungselement, welches an seiner proximalen Seite an einem Aufnahmegegenstand befestigt ist, mindestens eine Arretierungsvorrichtung, ein Justierelement, welches eine Ausnehmung aufweist, die einer Verjüngung des zweiten Befestigungselements Raum gibt und kleiner ist als ein erster Kragen des zweiten Befestigungselements und ein zweiter Kragen, eine Hülse, wobei die distale Seite der Hülse geeignet ist, in Formschluss mit der proximalen Seite des Abstandstücks.

## Beschreibung

### Feld

Die vorliegende Erfindung bezieht sich im Allgemeinen auf ein System, eine Baugruppe und ein Verfahren zur Montage insbesondere eines Handlaufs.

### Hintergrund

Handläufe werden in Krankenhäusern, Seniorenheimen, Badezimmern, Aufzügen usw. bereitgestellt, die mit der Hand ergriffen werden können, um Stabilität und Unterstützung zu erzielen. Sie werden auch an Treppen eingesetzt, um schädliche Stürze zu vermeiden. Für die Unterstützung werden Handläufe an Pfosten oder direkt an Wänden montiert. Verschiedene Normen - The International Code Council (ICC) und National Fire Protection Association (NFPA) - und Barrierefreiheitsnormen - ANSI A117.1 und der amerikanische Disabilities Act Standards for Accessible Design (ADASAD) - beziehen sich auf die Handlaufmaße. Gemäß den genannten Parametern sollen Handläufe und Montagezubehör eine Dauerbelastung von 7355 Nm oder eine vertikale Belastung von 90 kg tragen, die an jeder Stelle auf die Oberseite des Handlaufs aufgebracht wird. Im Allgemeinen werden Handläufe über Montagewinkel an Stützen wie Wänden oder Pfosten montiert. Die Halterungen dienen der Doppelfunktion, den Handlauf zu stützen und einen gewählten Abstand zur Halterung einzuhalten. Es gibt mehrere in der Technik bekannte Vorrichtungen, zum Beispiel:
US2010025252792A1 bietet eine Handlaufanordnung, die zum Greifen durch einen Fußgänger konfiguriert ist und ein Geländer aus einem stranggepressten Metall, wie beispielsweise Aluminium, beinhaltet. Das Geländer beinhaltet einen integral ausgebildeten Kanal, der über eine Länge innerhalb des Inneren des Geländers verläuft. Der Kanal beinhaltet einen Gewindeabschnitt zur Aufnahme eines Befestigungselements zur Befestigung der Handlaufanordnung an einer Montageanordnung zur Verbindung mit einer Wand. Die Montageanordnung beinhaltet ein Befestigungselement, das in einem Halterungspfosten befestigt ist, der sich nach unten vom Geländer der Handlaufanordnung erstreckt. Das Befestigungselement des Halterungspfostens wird durch ein Pilotloch, das in die Unterseite des Geländers gebohrt wird, selbst auf das Geländer aufgeschraubt. Der Halterungspfosten ist über ein Befestigungselement mit einer Halterung gekoppelt, um die Halterung dadurch an einer Wand zu befestigen, so dass die Handlaufbaugruppe an der Wand befestigt wird.
WO2009072149A1 bietet einen Handlauf mit einer Stange zur Befestigung an einer Wand durch Befestigungswinkel. Jede Halterung weist an einem ersten Ende einen Gewindeabschnitt oder eine Kupplungsplatte auf, die mit der Stange zu verbinden ist, und an einem zweiten Ende eine Jalousie mit Gewinde, die alternativ entweder einen Gewindestift, der in die Wand einzugreifen ist, oder einen Bolzen, der in eine Befestigungsbasis einzugreifen ist, aufnehmen kann, die wiederum an der Wand befestigt ist. Die Erfindung umfasst auch eine Handlaufhalterung und ein Handlauf-Montageset.
WO2012130784A1 offenbart eine Vorrichtung zur Befestigung eines Handlaufs, insbesondere in Schienenfahrzeugen, wobei die Vorrichtung mindestens ein Befestigungselement zur Befestigung der Vorrichtung an einer Tragkonstruktion, mindestens ein Verbindungselement und den mindestens einen Handlauf umfasst, wobei mindestens ein Endabschnitt des Handlaufs ein Innengewinde auf der Handlaufseite aufweist, wobei das Verbindungselement ein erstes Außengewinde aufweist, wobei das Außengewinde in das Innengewinde auf der Handlaufseite einschraubbar ist, wobei ein Abschnitt des Befestigungselements auf der Befestigungselementseite ein Innengewinde auf der Befestigungselementseite aufweist, und wobei das erste Außengewinde oder ein zweites Außengewinde des Verbindungselements in das Innengewinde auf der Befestigungselementseite einschraubbar ist. Die Erfindung bezieht sich ferner auf ein Verfahren zur Herstellung mindestens einer Vorrichtung.
WO2017034153A1 bezieht sich auf eine Handlaufstützvorrichtung für Aufzüge, die umfasst: eine Befestigungsplattenanordnung; und eine mit der Befestigungsplattenanordnung gekoppelte Halterung, wobei die Halterung Folgendes umfasst: eine T-Nutensteinführung; eine T-Nutensteinführung, die mit der T-Nutensteinführung gekoppelt ist; ein Stopper, der mit einem Schraubenkopf in Kontakt kommt; eine Bolzenstütze; und ein Verriegelungsschritt, wobei die Halterung in die mit dem Handlauf gekoppelte Befestigungsplattenanordnung eingesetzt ist, wobei ein gestufter Abschnitt des Verriegelungsschritts in ein Verriegelungsloch eingreift und mit diesem gekoppelt ist, und dann, wenn ein Bolzen durch ein Kupplungsloch eingeführt und in einem Schraubenloch der T-Nutenstein festgezogen wird, die Befestigungsplattenanordnung durch Elastizität nach unten gebogen wird, um eine Kraft auf den Handlauf auszuüben.

### Zusammenfassung

Während der Stand der Technik in mancher Hinsicht vielleicht zufriedenstellend ist, weist er doch gewisse Mängel und Nachteile auf. Die Handläufe sollten idealerweise geradlinig ausgerichtet sein, aber manchmal ist dies aufgrund der Nichtverfügbarkeit der entsprechenden Auflagefläche nicht möglich. Außerdem werden die Handläufe ständig von der Oberseite gedrückt, was zu einem Drehmoment an der Oberseite der Auflageflächenbefestigung führt. Es ist notwendig, eine zusätzliche Gegenkraft vorzusehen. Darüber hinaus ist beim Bohren von Löchern auf die Auflagefläche für die Montage eines Handlaufs manchmal eine Abweichung von den Zeichnungen unvermeidlich, so dass auf das Montageteil ein akzeptabler Variationsgrad angewendet werden muss.

Bei einigen Aufzügen ist die Montage von Handläufen nur von der Innenseite der Aufzugskabine aus möglich, da der Zugang zum Aufzugsschacht klein und schwierig ist. Die Bereitstellung des Montagesystems im Inneren des Aufzugsschachts kann die Sicherheit und Ästhetik beeinträchtigen.

Es ist daher Gegenstand der Erfindung, die Mängel und Nachteile des Standes der Technik zu überwinden oder zumindest zu mildern. Insbesondere ist es Gegenstand der vorliegenden Erfindung, ein verbessertes Handlaufbefestigungssystem bereitzustellen, bei dem die Halterung mit zwei Gegenstücken versehen ist, von denen eines am Handlauf und das andere an der Auflagefläche befestigt ist.

Es wird ein System zum Befestigen einer Führungseinrichtung an einem Aufnahmegegenstand vorgestellt. Die Führungseinrichtung kann ein Handlauf sein, eine Schiene, eine Brüstung, ein Geländer oder Ähnliches. Hierbei kann die Führungseinrichtung ein Abstandsstück aufweisen, welches auf seiner distalen Seite geeignet zur Aufnahme der Führungseinrichtung sein kann. So eine Aufnahme kann durch eine Schraubverbindung dargestellt werden. Vorzuziehen sind lösbare Verbindungen, unter welche auch Niet-, Clip- oder Bajonettverschlüsse fallen können. Jedoch können auch nicht, oder nur schwer, lösbare Verbindungen vorgesehen werden, wie zum Beispiel Schweiß- oder Lötverbindungen. Weiters kann das Abstandsstück an seiner proximalen Seite ein erstes Verbindungselement aufweisen. Dieses erste Verbindungselement kann als Innengewinde ausgeführt sein, welches mit einem anderen Bestandteil des Befestigungssystems komplementär in Eingriff stehen kann. Als vorteilhat hat sich ein Innengewinde dargestellt. Jedoch kann auch eine Spreizverbindung, ein Sprengring oder Ähnliches eingesetzt werden. Ein erstes Befestigungselement kann in Eingriff mit dem Abstandsstück stehen oder in Eingriff gebracht werden.

Ein zweites Befestigungselement kann mit seiner proximalen Seite zur Herstellung einer Verbindung mit einem Aufnahmegegenstand vorgesehen sein. Unter einem Aufnahmegegenstand kann eine Wand, ein Pfosten, der Boden oder eine Decke zu verstehen sein. An dem zweiten Befestigungselement kann eine Vorrichtung vorgesehen werden, welche eine Rotationsbewegung übertragen kann. Die Vorrichtung für die Übertragung einer Rotationsbewegung, welche auch als Arretierungsvorrichtung bezeichnet werden kann, kann durch Stifte dargestellt werden, welche durch ein Loch, oder mehrere Löcher gesteckt werden können. Anstelle der Stifte können auch Ratschen vorgesehen sein. Eine weitere Möglichkeit kann auch ein System sein, welches per Federkraft Stifte nach außen drückt. Anstelle oder zusätzlich zu den Stiften können auch fest am zweiten Befestigungselement angebrachte Dorne vorgesehen werden.

Um eine Zugkraft aufnehmen zu können, kann das System zur Befestigung einer Führungseinrichtung ein Justierelement aufweisen. Das Justierelement kann mit dem ersten Verbindungselement in Eingriff stehen und entsprechend komplementär zu dem ersten Verbindungselement ausgeführt sein. Proximal zum Abstandsstück kann eine Hülse vorgesehen sein, welche an seiner distalen Seite in Formschluss mit der proximalen Seite des Abstandstücks gebracht werden kann.

Das Befestigungssystem kann dazu vorgesehen sein, eine Führungseinrichtung mit einem Aufnahmegegenstand zu verbinden. Diese Verbindung soll dazu geeignet sein, Unregelmäßigkeiten am Aufnahmegegenstand auszugleichen. So mag zum Beispiel der Aufnahmegegenstand ein Mauerwerk darstellen. Ist nun in dem Mauerwerk eine Stahlstrebe enthalten, wird ein Handwerker an der an sich vorzusehenden Stelle kein Loch bohren können. Stattdessen kann er das Loch etwas verssetzt anbringen. Das Befestigungssystem kann nun eine solche Unebenheit ausgleichen, weil die Flucht der beiden, in den Figuren als Schrauben dargestellten Verbindungselemente, nicht kongruiert.

Der Aufnahmegegenstand kann auch eine Aufzugskabine, eine Begrenzungseinrichtung und/oder eine Stützeinrichtung sein.

Das Abstandsstück kann die Form einer Hülse aufweisen. Diese Hülse kann neben der Gestalt eines runden oder ovalen Rohres auch ein Vieleck sein.

Das erste Verbindungselement kann durch ein Gewinde beliebiger Norm dargestellt werden, auch als Feingewinde. Andere Verbindungen sind möglich, wie zum Beispiel ein Bajonettverschluss oder eine Rast-Vorrichtung.

Das Justierelement kann in Form eines U oder eines unvollständigen Ringes gestaltet sein. Der innere Durchmesser des Justierelements kann korrespondieren mit einer Verjüngung, welcher durch das zweite Befestigungselement bereitgestellt werden kann. Das Justierelement kann mit dem Abstandsstück über das erste Verbindungselement in Eingriff gebracht werden. Das Justierelement kann mit dem zweiten Befestigungselement so interagieren, dass es eine longitudinale Festlegung definiert, gleichzeitig aber das zweite Befestigungselement gegenüber dem Justierelement frei rotieren kann.

Das zweite Befestigungselement kann zwei Kragen aufweisen mit einem dazwischenliegenden Hals. Während die Verjüngung so bemaßt sein kann, dass das Justierelement mit seinem Innendurchmesser die Verjüngung umfassen kann, können die Kragen so bemessen sein, dass sie eine longitudinale Festlegung treffen können zwischen dem Justierelement und dem zweiten Befestigungselement.

Das Zusammenspiel des zweiten Befestigungselements mit dem Justierelement kann auch so ausgestaltet sein, dass der distale Kragen von dem zweiten Befestigungselement lösbar ist. Das Justierelement kann dann zwischen den beiden Kragen des zweiten Befestigungselements platziert werden.

Während das Justierelement im Zusammenwirken mit der Verjüngung und den beiden Kragen des zweiten Befestigungselements eine longitudinale Festlegung treffen kann, kann mindestens eine Arretierungsvorrichtung geeignet sein, eine Rotationsbewegung der Hülse auf das zweite Befestigungselement zu übertragen.

Die Arretierungsvorrichtung kann durch einen oder mehrere Stifte ausgeführt sein, welche durch ein oder mehrere Querlöcher gesteckt werden können. Andere Arretierungsmöglichkeiten sind umfasst, wie zum Beispiel eine Klinken-Vorrichtung, welche eine Rotation in einem gewünschten Drehsinn übertragen kann, in der anderen Drehrichtung jedoch leer durchdreht und keine Kraftübertragung ermöglicht, ausgeführt ist.

Versuche ergaben mit einer Arretierungsvorrichtung in Form eines Zylinderstifts in einer exzentrischen Anwendung eine Kraftübertragung ein Drehmoment von mindestens 50 Nm, welches mit einer Zylinderstiftzahl-Erhöhung axial zum Beispiel von 2 auf 4 oder 6 usw. wesentlich erhöht werden kann.

Zum Vergleich hat eine Edelstahlschraube M8 Standard A2-70 ein Anzugsdrehmoment von 16 Nm und ein Bruchdrehmoment von 32 Nm.

Das Justierelement kann mit dem ersten Verbindungselement komplementär in Verbindung gebracht werden. Auch hier sind dabei verschiedene Ausführungen umfasst, wie zum Beispiel Gewinde, eine Bajonettvorrichtung, auch Klebeverbindung oder Schrumpfverbindung. So eine Schrumpfverbindung kann auch durch ein temperaturgeführtes Vorgehen erzielt werden.

Das zweite Befestigungselement kann einen ersten Kragen, eine Verjüngung und einen weiteren Kragen aufweisen. Die Verjüngung kann geeignet sein, das Justierelement aufzunehmen.

An seinem Hals kann das zweite Befestigungselement ein oder mehrere Löcher aufweisen. Durch das Loch kann eine Arretierungsvorrichtung gesteckt werden, welche sich verschieben kann. Weiters kann das zweite Befestigungselement auch ein zweites Verbindungselement aufweisen. Je nach Aufnahmegegenstand und den örtlichen Gegebenheiten kann das zweite Verbindungselement ein Metallgewinde sein oder geeignet sein, in einen Dübel, in Holz oder Kunststoff eingeschraubt zu werden.

Das Justierelement kann einen oder mehrere Widerparte für ein Werkzeug aufweisen. Bei einer Schraubverbindung kann sich ein Stirnloch anbieten, welches über einen Stirnlochschlüssel das Justierelement mit dem Abstandsstück verbinden kann.

Das zweite Befestigungselement kann aus zusammensetzbaren Zeilen bestehen, welche die Funktionen aufweisen, dass im Zusammenspiel mit dem ringförmigen Justierelement eine longitudinale Festlegung getroffen werden kann.

Die Arretierungsvorrichtung kann geeignet sein, eine Rotationsbewegung, welche von einem Handwerker auf die Hülse aufgebracht wird, an das zweite Befestigungselement übertragen werden kann. Dies kann entweder reversibel vorgesehen sein, wie dies bei einer Schraube üblich sein kann. Um Vandalismus zu vermeiden, kann die Arretierungseinrichtung aber auch so gestaltet sein, dass lediglich ein Schließen der Verbindung erlaubt ist, während eine Rotationsbewegung auf die Hülse in öffnender Weise zu keiner Kraftübertragung auf das zweite Befestigungselement führt.

Es wird ferner ein Verfahren zur Befestigung eines Führungselements an einem Aufnahmegegenstand offenbart, wobei ein Befestigungssystem eine feste und mechanisch stabile Verbindung zwischen einer Führungseinrichtung und einem Aufnahmegegenstand bilden kann.

Das Verfahren kann mehrere Schritte aufweisen: ein Abstandsstück kann mit seiner distalen Seite an einem Führungselement mittels einem ersten Befestigungselement befestigt werden. Ein zweites Befestigungselement kann mit einem Justierelement in Eingriff gebracht werden dergestalt, dass das Justierelement kragenartig zwischen einer ersten Verdickung des zweiten Befestigungselements und einer zweiten Verdickung des zweiten Befestigungselements eine Verjüngung des zweiten Befestigungselements signifikant umfassen kann und das Justierelement mit dem Abstandsstück an dessen proximaler Seite in Eingriff gebracht werden kann und eine Hülse dergestalt über das zweite Befestigungselement gelagert werden kann, dass eine Arretierungseinrichtung eine Torsionsbewegung der Hülse zwangsweise an das zweite Befestigungselement übertragen kann, wobei die axialen Fluchten zwischen dem ersten Befestigungselement und dem zweiten Befestigungselement abweichen können.

### Kurzbeschreibung der Figuren

**Fig. 1a** - zeigt ein Abstandstück mit einem ersten Befestigungselement.
**Fig. 1b** - bildet ein zweites Befestigungselement ab.
**Fig. 1c** - zeigt eine Ausführungsform eines Justierelements.
**Fig. 2** - zeigt das Abstandsstück mit einem teilweise eingesetzten ersten Befestigungselement.
**Fig. 3** - zeigt das Zusammenwirken einer Führungseinrichtung und einer Hülse mit einem Aufnahmegegenstand.
**Fig. 4a** - zeigt eine Ausführungsform einer Hülse.
**Fig. 4b** - stellt das Justierelement in einer Ansicht dar.
**Fig. 4c** - zeigt eine Hülse in einer Ansicht.
**Fig. 4d** - zeigt das zweite Befestigungselement mit applizierten Stiften.
**Fig. 5a** - zeigt das zweite Befestigungselement mit applizierten Stiften.
**Fig. 5b** - stellt das zweite Befestigungselement mit applizierten Stiften dar.

### Figurenbeschreibung

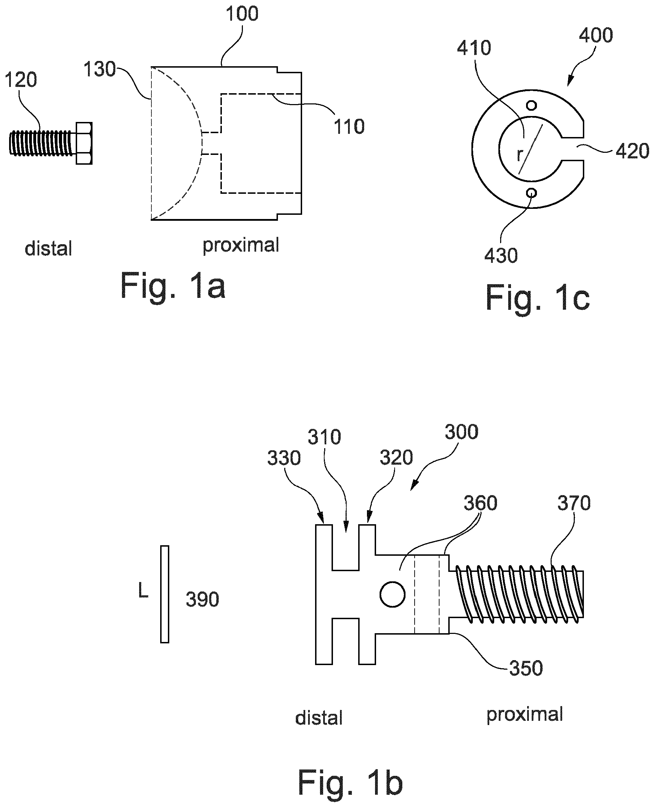

**Fig. 1a** zeigt ein Abstandsstück **100.** Ein erstes Befestigungselement **120** kann für die Aufnahme und/oder Befestigung eines Führungselements verwendet werden, wie es zum Beispiel ein Geländer oder ein Handlauf darstellt. Hier ist eine lösbare Verbindung in Form einer Schraube abgebildet; es soll aber ausdrücklich verstanden werden, dass jede andere Art der Befestigung Verwendung finden kann, zum Beispiel eine Schweiß- oder Lötverbindung, eine Klebeverbindung, ein Klippverschluss o.Ä. Auch eine integrale oder einstückige Verbindung der Führungseinrichtung mit dem Abstandsstück **100** ist umfasst.

Im Inneren des Abstandstückes **100** befindet sich ein erstes Verbindungselement, das im gezeigten Beispiel durch ein Innengewinde dargestellt ist. Es soll gelten, dass jede andere Form der formschlüssigen und festen, aber lösbaren Verbindung umfasst sein soll. Es ist beispielsweise ein Bajonettverschluss vorstellbar. Dieses erste Verbindungselement soll komplementär zu einem Justierelement (siehe Bezugsziffer **400** in **Fig. 1c**) zu verstehen sein.

Das Abstandsstück **100** kann einen ringförmigen Zylinder umfassen. Es kann ferner eine Verbindungsbasis **130** aufweisen, die entsprechend der Form einer Führungseinrichtung **1** konfiguriert werden kann. Die Führungseinrichtung **1** kann ein Handlauf, Geländer, Umzäunung, Haltegriff, Baluster, etc. sein. Das Objekt kann auch eine planare Oberfläche sein, z.B. eine Wand. Die Verbindungsbasis kann somit eine planare Basis sein und/oder eine Krümmung aufweisen.

Weiterhin kann das Abstandsstück 100 eine Öffnung aufweisen. Die Öffnung kann zur Aufnahme eines ersten Befestigungselements 120 konfiguriert werden. Das Befestigungselement 120 kann lösbar an dem Abstandsstück 100 befestigt werden, so dass es das Abstandsstück 100 an der Führungseinrichtung befestigt.

Außerdem kann das erste Befestigungselement 120 eine Schraube sein und ein Gewinde und einen Kopf umfassen. Das erste Befestigungselement 120 kann auch eine Klemme, einen Klebstoff, einen Magneten, einen Saugnapf und dergleichen umfassen. Das erste Befestigungselement 120 kann ferner konfiguriert werden, um zu crimpen, zu schweißen, zu löten, zu kleben, zu bändern, etc.

**Fig. 1b** zeigt ein zweites Befestigungselement **300.** Dieses ist in dieser Ausführung aufgebaut als Spezialschraube; deren Gewinde kann z.B. mit einem Dübel in einer Wand eingeschraubt werden. Es ist jedoch auch umfasst ein Schnappverschluss. Das zweite Befestigungselement **300** weist einen Hals **350** auf, durch den mindestens eine Bohrung **360** geführt worden ist. Durch diese Bohrung **360** kann eine Arretierungsvorrichtung **390** geführt werden, hier durch einen Metallstift **390** dargestellt. Distal von Hals **350** aus betrachtet, schließt sich ein tellerartiger Kragen **320** an. Dieser erste Kragen ist größer in den äußeren Abmaßen, damit das Justierelement **400** aus der **Fig. 1c** in Befestigungselement **300** einen Widerpart findet. Weiter distal von dem tellerartigen Kragen befindet sich eine Verjüngung **310,** welche weiter distal von einem zweiten Kragen **330** umgrenzt wird. Die Maße der Verjüngung **310** korreliert mit einer Ausnehmung **410** aus **Fig. 1c****.** Auch der Abstand der beiden Kragen (**320, 330**) korreliert mit der Mächtigkeit des Justierelements aus **Fig. 1c****.**

Die Kragen **320** und **330** können einen im Wesentlichen gleichen Durchmesser umfassen; auch eine Vieleckform ist umfasst. Eine Ausführungsform eines zweiten Befestigungselements **300** kann eine zusammengesetzte Form aufweisen.

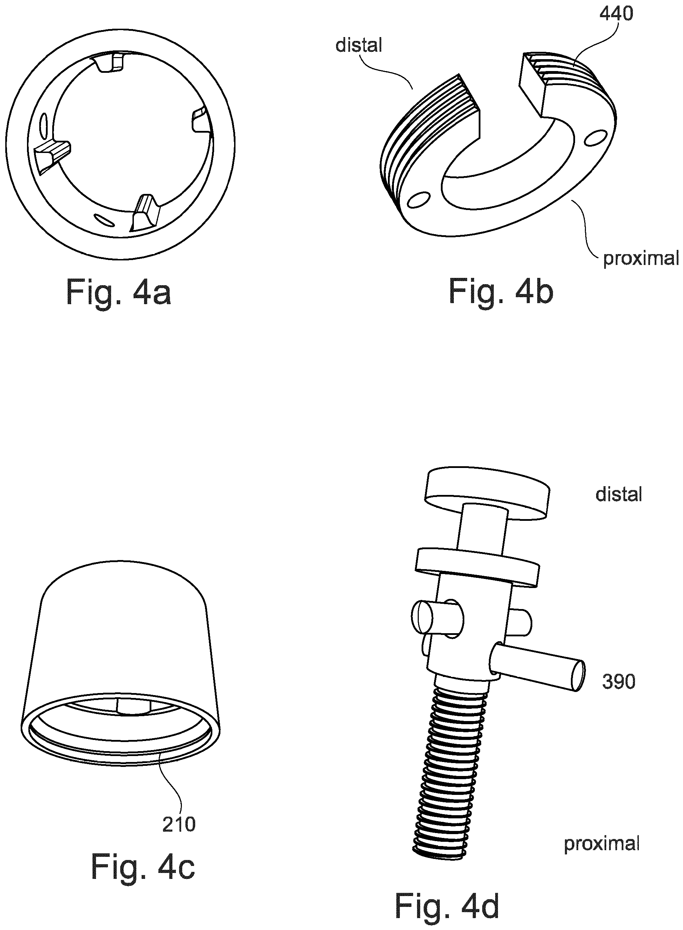

Das zweite Befestigungselement 300 kann auch eine Arretierungsvorrichtung **390** aufweisen. An seinem Hals kann das zweite Befestigungselement eine oder mehrere Bohrungen aufweisen, wodurch ein oder mehrere Arretierungsvorrichtung(en) **390** gesteckt werden können. Weiterhin kann die Länge der Arretierungsvorrichtung oder des Stiftes **390** so konfiguriert werden, dass die Länge des Stiftes **390** kleiner ist als der Innendurchmesser D einer Hülse, wie diese in **Fig. 4a** gezeigt ist. Die Länge des Stiftes kann aber größer sein als der kleine Durchmesser **d** aus **Fig. 4a**; dieser Durchmesser ergibt sich aus dem Innendurchmesser **D** vermindert um die Höhe mindestens eines Noppen.

Das proximale Ende des zweiten Verbindungselements 300 kann ferner ein zweites Verbindungselement 370 umfassen. Das zweite Verbindungselement 370 kann zur Befestigung an einem Aufnahmegegenstand konfiguriert werden. Der Aufnahmegegenstand kann eine Wand, ein Pfosten, eine Tür usw. sein. Das zweite Verbindungselement 370 kann ein Gewinde, eine Klemme, einen Klebstoff, einen Magneten, einen Saugnapf und dergleichen umfassen. Auch nicht lösbare Verbindungen sind umfasst.

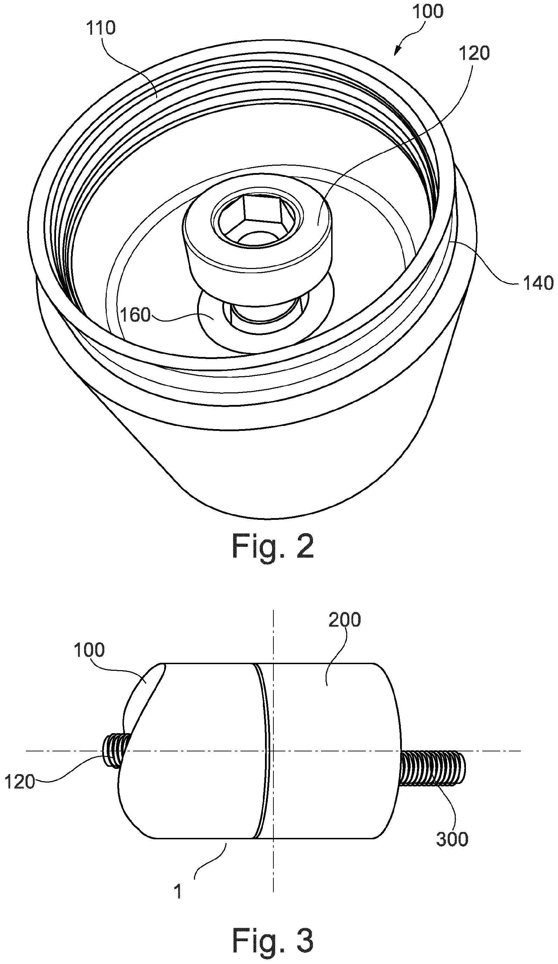

**Fig. 1c** zeigt ein Justierelement **400,** welche eine Ausnehmung **410** aufweist. Diese Ausnehmung **410** ist so dimensioniert, dass das zweite Befestigungselement **300** mit seiner Verjüngung **310** darin zu liegen kommt. Der Innendurchmesser der Ausnehmung **410** und die Verjüngung **310** des zweiten Befestigungselements **300** erlauben eine Verschiebung in den axialen Fluchten. **Fig. 3** zeigt diese Verschiebung deutlich.

Das Justierelement **400** kann fest, aber lösbar, in Eingriff mit dem Abstandsstück **100** aus **Fig. 1a****,** und dort mit dem ersten Verbindungselement **110** treten. Das Justierelement **400** kann in diesem Beispiel mit einem Stirnlochschlüssel, der mit der Ausnehmung oder Bohrung **430** in Interaktion tritt, festgezogen werden. Wie in **Fig. 1a** bereits beschrieben, kann jede andere feste, aber lösbare Verbindung gewählt werden.

Weiterhin kann das Justierelement **400** eine Lücke oder eine Ausnehmung **420** umfassen. Die Lücke **420** kann so beschaffen sein, dass die Verjüngung **310** die Justiereinheit **400** aufnehmen kann. Die Justiereinheit **400** ein Installationselement **430** umfassen. Das Installationselement **430** kann konfiguriert werden, um mindestens einen Schraubendreher aufzunehmen, der ferner konfiguriert werden kann, um eine Rotationskraft an der Verbindungskomponente **400** aufzubringen.

Das Installationselement 430 kann auch ein Magnet sein, der konfiguriert werden kann, um in Gegenwart eines zweiten Magneten ein Drehmoment zu erzeugen, um die Verbindungskomponente (400) mit dem ersten Gegenstück (100) zu verbinden.

Das Justierelement 400 kann weiterhin mit dem Abstandsstück 100 verbunden werden. Das Justierelement 400 kann auch konfiguriert werden, um das zweite Befestigungselement 300 aufzunehmen und axial zu verriegeln.

**Fig. 2** zeigt Abstandsstück **100** sowie das erste Befestigungselement **120** aus einer anderen Perspektive als **Fig. 1a****.** Das erste Verbindungselement **110** ist hier als Innengewinde dargestellt. Das Justierelement **400** wird hier eingeschraubt. Anstelle einer Schraubverbindung kann auch ein Klippverschluss gewählt werden, womit Justierelement **400** dann in Abstandsstück einrastet. Ausnehmung **160** kann vorgesehen werden, um das erste Befestigungselement **120** wenigstens teilweise versenkt werden kann. Schulter **140** stellt eine optionale Zentrierung dar, um eine Hülse **200** aus **Fig. 3** aufzunehmen.

**Fig.** 3 zeigt eine Ausnehmung für eine Führungseinrichtung **1,** links mit dem Abstandsstück **100** und dem ersten Befestigungselement **120.** Rechts ist eine Hülse **200** zu sehen, welche das zweite Befestigungselement **300** teilweise zeigt. Hier ist das Abstandsstück **100** mit einer Rundung zur Aufnahme eines runden Handlaufs dargestellt.

Die waagerecht dargestellte Achse zeigt, dass das erste Verbindungselement **120** und das zweite Verbindungselement **300** nicht in der gleichen Flucht liegen müssen. Es ist der Zweck der Vorrichtung, dass konstruktiv bedingte Ungleichheiten zwischen dem Verlauf einer Führungseinrichtung, wie einem Handlauf, und der Befestigungsmöglichkeit an einem Aufnahmegegenstand ausgeglichen werden können und gleichwohl eine gute Verbindung gewährleistet werden kann.

Eine Ausführungsform eines Abstandsstücks **100** und einer Hülse **200** mit einem ersten Verbindungselement **110** und einem zweiten Befestigungselement **300.** Die Befestigung für eine Führungseinrichtung **1** wird mit Darstellung der radialen und axialen Richtung dargestellt. Die Zeichnung zeigt, dass das erste Befestigungselement **120** zwar parallel zur waagerechten Achse, jedoch nicht in der gleichen Ebene stehen muss.

Es sollte klar sein, dass anstelle der dargestellten Schraubverbindungen (**120** und **300**) jede andere, lösbare wie unlösbare, Verbindung möglich ist, wie zum Beispiel Schnapp-, Magnet-, Bajonett-, Klebe-, Schweiß- oder Lötverbindung(en), entweder einseitig oder beidseitig.

**Fig. 4a** zeigt eine Hülse **200** mit Noppen, welche einen Widerpart darstellen zu der Arretierungsvorrichtung **390** aus **Fig. 1b****.** In diesem Ausführungsbeispiel ist Hülse **200** im Inneren mit noppenförmigen oder zahnradartigen Mitnehmern ausgestaltet. Der Außendurchmesser der Hülse **200** ist in diesem Beispiel identisch mit dem Außendurchmesser des Abstandsstücks **100** aus **Fig. 1a****.** Es ist anzustreben, dass die beiden Elemente, die Hülse **200** und das Abstandsstück **100** aus **Fig. 1a** formschlüssig in Eingriff stehen; damit kann Vandalismus reduziert werden. Außerdem soll jegliche Verletzungsmöglichkeit durch scharfe Kanten ausgeschlossen werden. Die Form im Inneren der Hülse **200** ermöglicht es einer Arretierungsvorrichtung **390** Widerpart zu finden. Durch eine an der Außenseite der Hülse **200** aufgebrachte Torsionsbewegung interagieren die Noppen im Inneren der Hülse **200** mit einer oder mehreren Arretierungsvorrichtung(en). So wird die Torsionsbewegung auf das zweite Befestigungselement **300** übertragen. Ohne Bezugsziffer sind in dieser Figur zwei Löcher angedeutet, welche als Ansetzpunkte für die Verwendung eines Hakenschlüssels dienen können. Die Hülse **200** kann so einer Torsionsbewegung unterworfen werden. Anstelle einer runden Hülse **200** kann auch eine Hülse **200** in eckiger, zum Beispiel 4-, 6- oder Vieleckiger Ausführung vorgesehen werden. Anstelle der ohne Bezugsziffer gezeigten Löcher kann auch jede andere technische Möglichkeit vorgesehen werden.

**Fig. 4b** stellt das Justierelement **400** dar. Hier ist es gezeigt als ringförmiges Element mit einer Ausnehmung **410.** Der innere Radius r ist kleiner als die Durchmesser der Kragen **320** und **330** am zweiten Befestigungselement **300.** Die Ausnehmung **420** ist so dimensioniert, dass das Justierelement **400** über den Hals **310** des zweiten Befestigungselements geführt werden kann. Das hier gezeigte Außengewinde **440** kann mit dem in **Fig. 2** gezeigten Innengewinde **110** gebracht werden. Es ist an dieser Stelle auch möglich, einen Schnappverschluss vorzusehen. Ein Schraubgewinde kann als Feingewinde ausgeführt sein.

**Fig. 4c** zeigt eine Hülse **200** wie bereits in **Fig. 4a** beschrieben. In dieser Darstellung ist eine Ausnehmung **210** zu sehen; diese Ausnehmung ist komplementär zu verstehen zu der Schulter **140** aus **Fig. 2****.**

Gezeigt ist eine Ausführungsform der Hülse **200.** Die Hülse **200** kann als ringförmiger Zylinder ausgebildet sein und an seiner Innenseite Zähne aufweisen. Es sind Konfigurationen umfasst, welche mindestens einen Noppen, einen Mitnehmer oder Zahn aufweisen; üblicherweise wird eine gerade Anzahl von Noppen Verwendung finden.

Unter dem Begriff Noppen soll auch jede andere Vorrichtung verstanden werden, welche geeignet ist, eine Torsionskraft zu übertragen; dies können zum Beispiel Mitnehmer, wie Klinken sein.

Die Hülse **200** weist in ihrem Inneren Noppen auf, welche eine Torsionsbetätigung an der Hülse **200** über die Arretierungsvorrichtung **390,** wie in **Fig. 1b** und **4d** beschrieben, an ein zweites Befestigungselement **300** (siehe **Fig. 1b** und **4d**)) übertragen.

**Fig. 4d** zeigt das zweite Befestigungselement **300** mit zwei Arretierungsvorrichtungen **390** in zusammengebautem Zustand. Mit "proximal" ist die Seite zu verstehen, welche näher am Aufnahmegegenstand liegt. "Distal" hingegen ist die Seite, welche entfernt vom Aufnahmegegenstand (wie zum Beispiel eine Mauer) liegt - anders ausgedrückt, "distal" ist die Seite, an der ein Handlauf oder eine andere Führungseinrichtung sein kann.

Die Arretierungsvorrichtung **390** ist hier in zweifacher Ausführung zu sehen. Diese Arretierungsvorrichtung, welche hier als Stifte **390** ausgebildet sind, überträgt eine Torsionskraft, welche von der Hülse **200** (aus **Fig. 4a** und **4c**) ausgeübt wird, auf das zweite Befestigungselement (**300** in **Fig. 1b**) übertragen. Je nach der zu übertragenen Kraft ist die Anzahl der Arretierungsvorrichtungen oder Stifte **390** zu bemessen. Auch die Materialien sowohl des zweiten Befestigungselements als auch der Arretierungsvorrichtung **390** müssen den aufzuwendenden Kräften entsprechend gewählt werden.

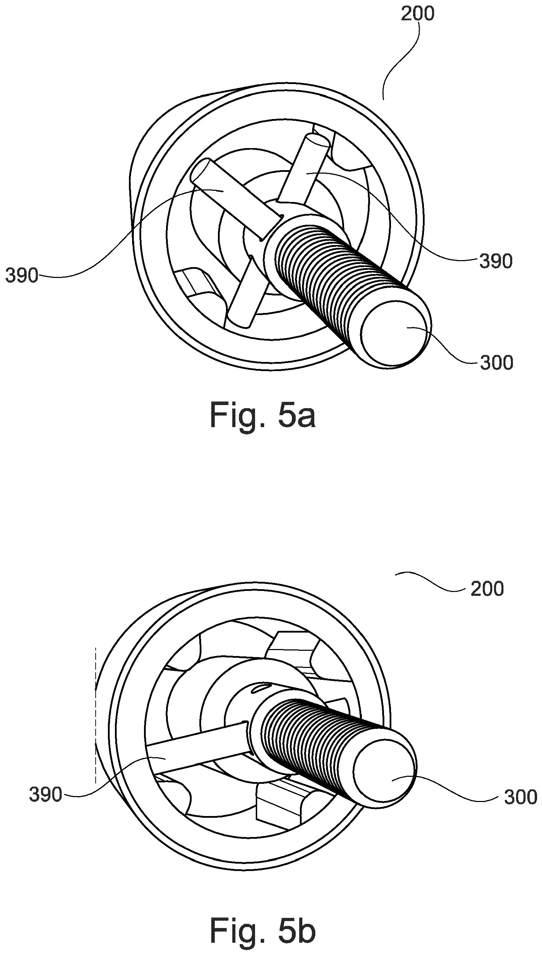

**Fig. 5a** zeigt eine perspektivische Darstellung, wie Hülse **200** mit Hilfe ihrer Noppen eine Torsion auf das zweite Befestigungselement oder Schraube **300** übertragen kann. Die Anzahl der Stifte **390** sowie die Anzahl der Noppen bestimmt den Betrag der übertragbaren Kraft, um eine Schraube an einem Aufnahmegegenstand zu befestigen.

**Fig. 5b** zeigt eine ähnliche Konfiguration wie **Fig. 5a****;** hier sind 4 Noppen zu erkennen sowie ein Stift **390.** Ein zweiter Stift **390** kann noch eingesetzt werden.

### Ausführungsformen

Im Folgenden werden exemplarische Ausführungsformen der Erfindung unter Bezugnahme auf die Abbildungen beschrieben. Diese Beispiele dienen dem besseren Verständnis der Erfindung, ohne ihren Umfang einzuschränken.

In der folgenden Beschreibung wird eine Reihe von Merkmalen und/oder Schritten beschrieben. Der Fachmann wird verstehen, dass die Reihenfolge der Merkmale und Schritte für die resultierende Konfiguration und deren Wirkung nicht entscheidend ist, es sei denn, dies ist durch den Kontext ersichtlich. Weiterhin wird für den Fachmann erkennbar sein, dass unabhängig von der Reihenfolge der Merkmale und Schritte zwischen den Schritten zwischen einigen oder allen beschriebenen Schritten zeitliche Verzögerungen auftreten können.

Die Beschreibung der Figuren gibt zunächst einen allgemeinen Überblick über die Ausführungsformen der vorliegenden Erfindung, bevor sie weitere Details zu spezifischeren Ausführungsformen, Merkmalen und Schritten der exemplarischen Ausführungsformen der vorliegenden Erfindung enthält.

Jedwede Bestandteile oder Eigenschaften die in Zusammenhang mit den Teilen, beschrieben und gefordert sind, sind auch wichtig in Bezug auf die Vorgehensweise und müssen als für entsprechende Vorgehensschritte berücksichtigt werden.

Der Ausdruck "und/oder" beabsichtigt eine mögliche Alternative alleine oder mehrere mögliche aufgeführte Kombinationen zu erfassen. Ein "und / oder" vor der letzten Möglichkeit einer Liste von Alternativen, gilt zwischen allen Schritten dieser Liste.

In diesem Text, einschließlich der Anforderungen wird davon ausgegangen, dass alle Ausdrücke im Singular auch den Plural einhalten und umgekehrt, außer wenn im Text ausdrücklich anders beschrieben.

In der gesamten Beschreibung kommen die Ausdrücke, "enthalten", "beinhalten", "bestehen aus", "haben" und Varianten davon vor, sie bedeuten, "im Umfang enthalten aber nicht darauf begrenzt" und schließen die Verwendung zusätzlicher, anderer Komponenten nicht aus.

Dieser Text beinhaltet exakte Begriffe, Eigenschaften, Werte und Bereiche; falls diese Begriffe, Eigenschaften, Werte und Bereiche in Zusammenhang mit Ausdrücken wie, "ungefähr", "etwa", "generell", "wesentlich", "grundsätzlich", "mindestens" oder ähnlichen, benutzt werden, bleibt die Exaktheit der Begriffe stets beinhaltet.

Der Ausdruck "mindestens eines" bedeutet stets "ein oder mehr" und gesteht daher verschiedene Möglichkeiten zu, die die Verwendung von einem oder mehreren Teilen gestatten. Weiterhin haben bei abhängigen Anforderungen die sich auf eigenständige Anforderungen beziehen die Eigenschaften "mindestens ein" bezeichnen, die gleiche Bedeutung wie die Bezeichnungen "das" oder "das mindestens eine".

Es wird vorausgesetzt, dass Variationen zu obigen Ausführungen der Erfindungen gemacht werden können und immer noch in die Bandbreite der Eigenschaften der Erfindung fallen. Alternativen die den gleichen, entsprechenden oder ähnlichen Zweck erfüllen, können Ausführungen die in der Spezifikation beschrieben wurden, ersetzen wenn nicht anders festgelegt. Das bedeutet, wenn nicht anders festgelegt, kann jede beschriebene Ausführung/Eigenschaft, ein Beispiel für eine Reihe typischer oder ähnlicher Ausführungen/Eigenschaften, sein.

Die Verwendung von beispielhafter Sprache, solche wie, "beispielsweise", "solche wie", "zum Beispiel" und ähnliche, wird vor allen genutzt um die Erfindung besser darstellen zu können und schwächt nicht die Bandbreite der Erfindung ab, wenn nicht explizit beschrieben. Alle Vorgehensschritte die in den Spezifikationen beschrieben sind, können in jedweder Reihenfolge oder auch gleichzeitig ausgeführt werden, es sei denn, der Zusammenhang der Beschreibung verneint dies klar.

Alle Eigenschaften/Ausführungen und/oder Vorgehensschritte, die in den Spezifikationen beschrieben sind, können in allen Kombinationen ausgeführt werden, außer in Kombinationen wo mindestens einige der Ausführungen und/oder Vorgehensschritte sich wechselseitig ausschließen. Insbesondere sind bevorzugte Eigenschaften der Erfindung auf alle Perspektiven der Erfindung anwendbar und können in jedweder Kombination eingesetzt werden.

Die gleichen Referenznummern die für verschiedene Ausführungen genutzt werden, sollen es ermöglichen, bestimmte Teile oder Funktionen unterschiedlicher Ausführungen mit gleicher oder ähnlicher Funktion zu identifizieren. Falls gleiche Referenznummern in andren Ausführungen nicht zu finden sind, soll dies keineswegs bedeuten, dass die entsprechenden Eigenschaften, die von diesen Referenznummern bezeichnet werden, nicht vorhanden sind.

Die beschriebenen Gewinde können jederzeit unterschiedliche Industrienormen haben solange sichergestellt ist, dass die geforderten technischen Effekte entsprechend erreicht werden.

Die Bezeichnung "Installateur", "Mechaniker" oder "Handwerker" beschreibt eine Person und/oder eine Berufsgattung die mittels eines Werkzeuges und/oder mittels eines Teils des Einbausatzes, eine mechanische Veränderung vornimmt.

Unter "proximal" ist die Seite der Befestigungseinrichtung zu verstehen, die näher an dem Aufnahmegegenstand liegt, in einem Beispiel also der Wand, an der eine Führungseinrichtung befestigt werden soll. So eine Führungseinrichtung kann ein Geländer oder ein Handlauf sein. Jede andere Anwendung ist denkbar, wie zum Beispiel die Abgrenzung eines Geheges.

Unter "distal" ist die Seite der Befestigungseinrichtung zu verstehen, welche näher an einer Führungseinrichtung liegt.

## Patentansprüche

1. Ein System zum Befestigen einer Führungseinrichtung (1) an einem Aufnahmegegenstand, aufweisend
a. ein Abstandsstück (100), auf der distalen Seite geeignet zur Aufnahme der Führungseinrichtung und auf der proximalen Seite versehen mit mindestens einem ersten Verbindungselement (110);
b. ein erstes Befestigungselement (120), mittels welchem das Abstandstück (100) mit der Führungseinrichtung verbunden ist;
c. ein zweites Befestigungselement (300), welches an seiner proximalen Seite an einem Aufnahmegegenstand befestigt ist;
d. mindestens eine Arretierungsvorrichtung (390);
e. ein Justierelement (400);
f. eine Hülse (200), wobei die distale Seite der Hülse (200) geeignet ist, in Formschluss mit der proximalen Seite des Abstandstücks (100) gebracht zu werden,
wobei
das Befestigungssystem (1) geeignet ist, die Führungseinrichtung mit dem Aufnahmegegenstand zu verbinden.

2. Ein Befestigungssystem (1) gemäß vorstehendem Anspruch, wobei der Aufnahmegegenstand eine Aufzugskabine, eine Mauer, eine Wand, eine Begrenzungseinrichtung und/oder eine Stützeinrichtung ist.

3. Ein Befestigungssystem gemäß einem der vorstehenden Ansprüche, wobei das Abstandsstück (100) die Form einer Hülse aufweist.

4. Ein Befestigungssystem (1) gemäß einem der vorstehenden Ansprüche, wobei das erste Verbindungselement (110) als Innengewinde ausgebildet ist.

5. Ein Befestigungssystem (1) gemäß einem der vorstehenden Ansprüche, wobei das Justierelement (400) eine Ausnehmung (410) aufweist, die einer Verjüngung (310) des zweiten Befestigungselements (300) Raum gibt und kleiner ist als ein erster Kragen (320) des zweiten Befestigungselements (300) und ein zweiter Kragen (330).

6. Ein Befestigungssystem (1) gemäß einem der vorstehenden Ansprüche, wobei die Arretierungseinrichtung eine Rotationsbewegung der Hülse auf das zweite Befestigungselement überträgt.

7. Ein Befestigungssystem (1) gemäß dem vorstehenden Anspruch, wobei die Arretierungseinrichtung durch einen Stift ausgeführt ist, welcher vorzugsweise ein Drehmoment von mindestens 50 Nm aufweist.

8. Das Befestigungssystem (1) gemäß einem der vorstehenden Ansprüche, wobei das Justierelement (400) komplementär zum Verbindungselement (110) ausgebildet ist und mit diesem in Eingriff steht.

9. Das Befestigungssystem (1) gemäß einem der vorstehenden Ansprüche, wobei das zweite Befestigungselement (300) aufweist
a. einen ersten Kragen (320); und
b. distal des ersten Kragens (320) eine Verjüngung (310); und
c. distal der Verjüngung (310) einen zweiten Kragen (330); und
d. an seinem Hals (350) mindestens eine Aufnahme für mindestens eine Arretierungsvorrichtung (390); und
e. ein zweites Verbindungselement (370).

10. Das Befestigungssystem (1) gemäß einem der vorstehenden Ansprüche, wobei das Justierelement (400) ringförmig aufgebaut und mit einem Gewinde versehen ist, welches mit dem Verbindungselement (110) in Formschluss steht.

11. Das Befestigungssystem (1) gemäß Anspruch 3, wobei das zweite Befestigungselement (300) aus zusammengesetzten Teilen besteht.

12. Das Befestigungssystem (1) gemäß einem der vorstehenden Ansprüche, wobei die Arretierungseinrichtung (390) durch eine rotierende Bewegung der Hülse (200) das zweite Befestigungselement (300) zwangsweise der rotierenden Bewegung der Hülse (200) unterwirft.

13. Das Befestigungssystem (1) gemäß dem vorstehenden Anspruch, wobei die Arretierungseinrichtung (390) aus mindestens einem Stift (390) besteht, der durch ein Querloch durch den Hals (350) des zweiten Befestigungselements (300) führt und axial verschiebbar angeordnet ist.

14. Ein Verfahren zur Befestigung eines Führungselements an einem Aufnahmegegenstand, wobei ein Befestigungssystem gemäß einem der Ansprüche 1 - 14 zum Einsatz kommt.

15. Ein Verfahren zur Befestigung eines Führungselements an einem Aufnahmegegenstand, wobei
a. ein Abstandsstück mit seiner distalen Seite an einem Führungselement mittels einem ersten Befestigungselement befestigt wird und
b. ein zweites Befestigungselement mit einem Justierelement in Eingriff gebracht wird dergestalt, dass das Justierelement kragenartig zwischen einer ersten Verdickung des zweiten Befestigungselements und einer zweiten Verdickung des zweiten Befestigungselements eine Verjüngung des zweiten Befestigungselements signifikant umfasst und
c. das Justierelement mit dem Abstandsstück an dessen proximaler Seite in Eingriff gebracht wird und
d. eine Hülse dergestalt über das zweite Befestigungselement gelagert wird, dass eine Arretierungseinrichtung eine Torsionsbewegung der Hülse zwangsweise an das zweite Befestigungselement überträgt;
wobei die axialen Fluchten zwischen dem ersten Befestigungselement und dem zweiten Befestigungselement abweichen können.

## Geänderte Patentansprüche

### Geänderte Patentansprüche gemäss Regel 137(2) EPÜ.

1. Ein System zum Befestigen einer Führungseinrichtung (1) an einem Aufnahmegegenstand, aufweisend
a. ein Abstandsstück (100), auf der distalen Seite geeignet zur Aufnahme der Führungseinrichtung und auf der proximalen Seite versehen mit mindestens einem ersten Verbindungselement (110);
b. ein erstes Befestigungselement (120), mittels welchem das Abstandstück (100) mit der Führungseinrichtung verbunden ist;
c. ein zweites Befestigungselement (300), welches an seiner proximalen Seite an einem Aufnahmegegenstand befestigt ist;
d. mindestens eine Arretierungsvorrichtung (390);
e. ein Justierelement (400);
f. eine Hülse (200), wobei die distale Seite der Hülse (200) geeignet ist, in Formschluss mit der proximalen Seite des Abstandstücks (100) gebracht zu werden,
wobei
das Befestigungssystem (1) geeignet ist, die Führungseinrichtung mit dem Aufnahmegegenstand zu verbinden.

2. Ein Befestigungssystem (1) gemäß vorstehendem Anspruch, wobei der Aufnahmegegenstand eine Aufzugskabine, eine Mauer, eine Wand, eine Begrenzungseinrichtung und/oder eine Stützeinrichtung ist.

3. Ein Befestigungssystem gemäß einem der vorstehenden Ansprüche, wobei das Abstandsstück (100) die Form einer Hülse aufweist.

4. Ein Befestigungssystem (1) gemäß einem der vorstehenden Ansprüche, wobei das erste Verbindungselement (110) als Innengewinde ausgebildet ist.

5. Ein Befestigungssystem (1) gemäß einem der vorstehenden Ansprüche, wobei das Justierelement (400) eine Ausnehmung (410) aufweist, die einer Verjüngung (310) des zweiten Befestigungselements (300) Raum gibt und kleiner ist als ein erster Kragen (320) des zweiten Befestigungselements (300) und ein zweiter Kragen (330).

6. Ein Befestigungssystem (1) gemäß einem der vorstehenden Ansprüche, wobei die Arretierungseinrichtung eine Rotationsbewegung der Hülse auf das zweite Befestigungselement überträgt.

7. Ein Befestigungssystem (1) gemäß dem vorstehenden Anspruch, wobei die Arretierungseinrichtung durch einen Stift ausgeführt ist.

8. Das Befestigungssystem (1) gemäß einem der vorstehenden Ansprüche, wobei das Justierelement (400) komplementär zum Verbindungselement (110) ausgebildet ist und mit diesem in Eingriff steht.

9. Das Befestigungssystem (1) gemäß einem der vorstehenden Ansprüche, wobei das zweite Befestigungselement (300) aufweist
a. einen ersten Kragen (320); und
b. distal des ersten Kragens (320) eine Verjüngung (310); und
c. distal der Verjüngung (310) einen zweiten Kragen (330); und
d. an seinem Hals (350) mindestens eine Aufnahme für mindestens eine Arretierungsvorrichtung (390); und
e. ein zweites Verbindungselement (370).

10. Das Befestigungssystem (1) gemäß einem der vorstehenden Ansprüche, wobei das Justierelement (400) ringförmig aufgebaut und mit einem Gewinde versehen ist, welches mit dem Verbindungselement (110) in Formschluss steht.

11. Das Befestigungssystem (1) gemäß Anspruch 3, wobei das zweite Befestigungselement (300) aus zusammengesetzten Teilen besteht.

12. Das Befestigungssystem (1) gemäß einem der vorstehenden Ansprüche, wobei die Arretierungseinrichtung (390) durch eine rotierende Bewegung der Hülse (200) das zweite Befestigungselement (300) zwangsweise der rotierenden Bewegung der Hülse (200) unterwirft.

13. Das Befestigungssystem (1) gemäß dem vorstehenden Anspruch, wobei die Arretierungseinrichtung (390) aus mindestens einem Stift (390) besteht, der durch ein Querloch durch den Hals (350) des zweiten Befestigungselements (300) führt und axial verschiebbar angeordnet ist.

14. Ein Verfahren zur Befestigung eines Führungselements an einem Aufnahmegegenstand, wobei
a. ein Abstandsstück mit seiner distalen Seite an einem Führungselement mittels einem ersten Befestigungselement befestigt wird und
b. ein zweites Befestigungselement mit einem Justierelement in Eingriff gebracht wird dergestalt, dass das Justierelement kragenartig zwischen einer ersten Verdickung des zweiten Befestigungselements und einer zweiten Verdickung des zweiten Befestigungselements eine Verjüngung des zweiten Befestigungselements signifikant umfasst und
c. das Justierelement mit dem Abstandsstück an dessen proximaler Seite in Eingriff gebracht wird und
d. eine Hülse über das zweite Befestigungselement gelagert wird, womit eine Arretierungseinrichtung mittels Noppen innerhalb der Hülse eine Torsionsbewegung der Hülse zwangsweise über an der Befestigungsschraube montierte Stifte an das zweite Befestigungselement überträgt;
wobei die axialen Fluchten zwischen dem ersten Befestigungselement und dem zweiten Befestigungselement abweichen können.
